# EUROPEAN PATENT APPLICATION

(11) **EP 4 155 885 A1**
(43) Date of publication of application: **29.03.2023**
(21) Application number: 21821362.7
(22) Date of filing: 08.04.2021
(51) Int. Cl.: G06F 3/041

(54) **DISPLAY SCREEN ASSEMBLY AND ELECTRONIC DEVICE**

(30) Priority: 09.06.2020 CN 202010526214
(71) Applicant: GUANGDONG OPPO MOBILE TELECOMMUNICATIONS CORP., LTD., Dongguan, Guangdong 523860 (CN)
(72) Inventor: JIA, Yuhu, Dongguan, Guangdong 523860 (CN)
(74) Representative: Manitz Finsterwald Patent- und Rechtsanwaltspartnerschaft mbB
(86) International application number: PCT/CN2021/085995
(87) International publication number: WO 2021/249000

(57) **Abstract**

Disclosed in the present application is a display screen assembly. The display screen assembly comprises: a display layer which comprises a plurality of rows of pixel units and a plurality of rows of sub-pixels; pressure sensing layers disposed in the adjacent pixel units or the adjacent sub-pixels; and a cover plate covering the display layer, wherein a virtual key is formed on the outer surface of the cover plate opposite to the pressure sensing layers, and the pressure sensing layers can receive pressure information by means of the virtual key of the cover plate. By adoption of the structure, there is no need to provide a physical key outside an electronic device, the pressure sensing layers disposed inside the electronic device can sense the pressure information of a virtual press area pressed by a user on the surface of the cover plate, and then different instructions are completed according to the pressure information, so that corresponding functions are achieved, and the screen-to-body ratio of the display screen assembly to the electronic device is further increased. The present application further provides an electronic device comprising the display screen assembly.

## Description

### TECHNICAL FIELD

The present disclosure relates to the field of display technology, and in particular to a display screen assembly and an electronic device.

### BACKGROUND

The screen-to-body ratio of mobile phones, tablet computers and other electronic devices is getting higher and higher. In order to increase the screen-to-body ratio further, the future disclosure of flexible screens with large-angle edge curving or even surrounding screens puts forward new requirements for screen functions: sites of the physical function buttons such as volume control and interest screen control on both sides of the original electronic device is occupied by an edge curved flexible screen. Therefore, there is a requirement for the function of detecting finger pressing in hyperbolic, quadric or surround screen side, namely, to realize the touch control function of the curved side of the screen.

### SUMMARY OF THE INVENTION

The present disclosure provides a display screen assembly and an electronic device.

In a first aspect, the present disclosure provides a display screen assembly, which includes: a display layer, including a plurality of rows of pixel units and a plurality of rows of sub-pixels; a pressure sensing layer, disposed in adjacent pixel units or adjacent sub-pixels; and a cover plate, covered on the display layer, a surface of the cover plate corresponding to the pressure sensing layer forms a virtual key, and the pressure sensing layer can receive a pressure information by the virtual key of the cover plate.

In a second aspect, the present disclosure provides a display screen assembly, which includes: a display layer, including a plurality of rows of pixel units and a plurality of rows of sub-pixels; a pressure sensing layer, disposed in adjacent pixel units and/or adjacent sub-pixels; and a cover plate, disposed on the display layer, an area of the cover plate corresponding to the pressure sensing layer forms a virtual press area, and the pressure sensing layer can receive a pressure information by the virtual press area of the cover plate.

In a third aspect, the present disclosure provides an electronic device, which includes a back shell and a display screen assembly overlapped with the back shell, and the display screen assembly is described above.

The display screen assembly and the electronic device in the present disclosure include: a display layer, a pressure sensing layer disposed in the display layer, and a cover plate disposed on the display layer. The display layer includes a plurality of rows of pixel units and a plurality of rows of sub-pixels, and the pressure sensing layer is disposed in adjacent pixel units or adjacent sub-pixels. A virtual key is formed on the surface of the cover plate corresponding to the pressure sensing layer, and the pressure sensing layer can receive the pressure information by the virtual key of the cover plate. Utilizing the above structure of the present disclosure, there is no need to set physical keys outside the electronic device, and the pressure sensing layer disposed inside the electronic device can sense the pressure information of the virtual press area pressed by the user on the surface of the cover plate, so as to complete different instructions according to the pressure information, and corresponding functions is realized, thus the screen-to-body ratio of the display screen assembly and the electronic device is further increased.

### BRIEF DESCRIPTION OF THE DRAWINGS

In order to more clearly illustrate the technical solutions of the embodiments of the present disclosure, the drawings for the description of the embodiment will be described in brief. Obviously, the drawings in the following description are only some of the embodiments of the present disclosure. For a person of ordinary skill in the art, other drawings may be obtained based on the following drawings without any creative work.
Fig. 1 is a schematic structural view of a display screen assembly of an embodiment according to the present disclosure.
Fig. 2 is a schematic structural view of an embodiment of the electronic device according to the present disclosure.
Fig. 3 is a part of the schematic structure view of the display screen assembly of an embodiment according to the present disclosure.
Fig. 4 is a part of the schematic structure view of the display screen assembly of another embodiment according to the present disclosure.
Fig. 5 is a part of the schematic structure view of the display screen assembly of another one embodiment according to the present disclosure.
Fig. 6 is a part of the schematic structure view of the display screen assembly of others embodiment according to the present disclosure.
Fig. 7 is a part of the schematic structural view of the Wheatstone Bridge Circuit of an embodiment according to the present disclosure.
Fig. 8 is a schematic structural view of an electronic device of another embodiment according to the present disclosure.
Fig. 9 is a schematic structural side view of the electronic device of an embodiment according to the present disclosure.

### DETAILED DESCRIPTION

Technical solutions of the embodiments of the present disclosure will be clearly and comprehensively described by referring to the accompanying drawings. Obviously, the embodiments described herein are only a part of, but not all of, the embodiments of the present disclosure. Based on the embodiments in the present disclosure, all other embodiments obtained by a person of ordinary skill in the art without any creative work shall fall within the scope of the present disclosure.

It should be noted that directional indications if present (such as up, down, left, right, front, back, ......) in the embodiments of the present disclosure are only expressed to explain relative positional relationships and movement between components in a particular attitude (as shown in the drawings). When the particular attitude is changed, the directional indications shall also be changed accordingly.

In addition, the terms "comprising" and "including" and any variations thereof are intended to cover non-exclusive inclusion. For example, a process, method, system, product or device that includes a series of steps or units is not limited to the listed steps or units, but optionally also includes steps or units that are not listed, or optionally includes other steps or units inherent to these processes, methods, products or devices.

The reference to "embodiment" means that a specific feature, structure or characteristic described in connection with an embodiment may be included in at least one embodiment of present disclosure. The appearance of the phrase "embodiment" in various places in the specification does not necessarily refer to the same embodiment, nor is it an independent or alternative embodiment mutually exclusive with other embodiments. It is understood explicitly and implicitly by those skilled in the art that the embodiments described herein can be combined with other embodiments.

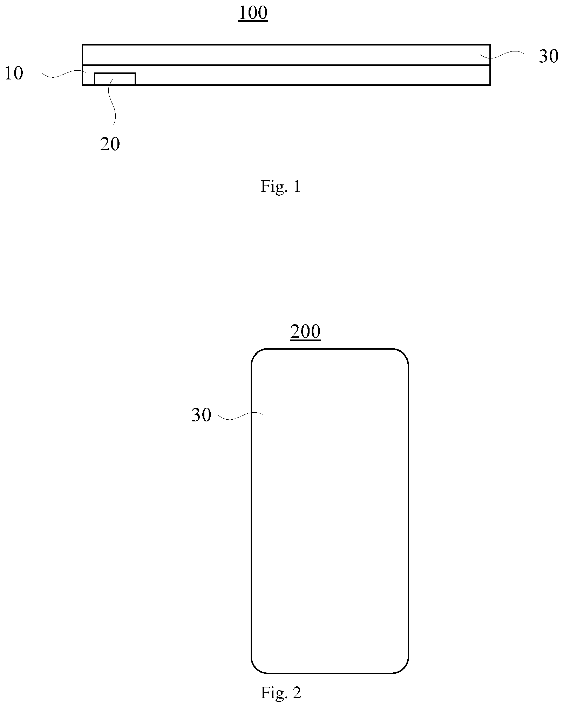

Referring to Fig. 1 and Fig. 2, Fig. 1 is a schematic structural view of a display screen assembly of an embodiment according to the present disclosure, and Fig. 2 is a schematic structural view of an embodiment of the electronic device according to the present disclosure. In one embodiment, an electronic device 200 can be any of various types of computer system devices that are mobile or portable, and perform wireless communication (only one form is shown by way of example of the electronic device 200 in Fig. 2). In one embodiment, the electronic device 200 can be a mobile phone or a smart phone (for example, a phone based on iPhone TM or Android TM), a portable game device (for example, Nintendo DS TM, PlayStation Portable TM, GameBoy Advance TM, iPhone TM, laptop computers, personal digital assistants (PDA), portable internet devices, music players and data storage devices, other handheld devices, such as headphones, etc. The electronic device 200 can also be other wearables that need to be charged (for example, head-mounted devices (HMD) such as electronic bracelets, electronic necklaces, electronic devices or smart watches).

The electronic device 200 can also be any one of a plurality of electronic devices, a plurality of electronic devices include, but are not limited to, cellular phones, smart phones, other wireless communication devices, personal digital assistants, audio players, other media players, music recorders, video recorders, other media recorders, radios, medical devices, vehicle transport instruments, calculators, programmable remote controllers, pagers, laptop computers, desktop computers, printers, netbook computers, PDA, portable multimedia player (PMP), moving picture experts group (MPEG-1 or MPEG-2), audio layer 3 player (MP3), portable medical equipment, digital camera and its combination, etc.

In some cases, the electronic device 200 can perform various functions (for example, playing music, displaying videos, storing pictures, and receiving and sending phone calls). If need be, the electronic device 200 can be such as a cellular phone, a media player, other handheld devices, a wristwatch device, a necklace device, an earpiece device, or other compact and portable devices.

Continued with referring to Fig. 1, the display screen assembly 100 provided by the present disclosure includes a display layer 10, a pressure sensing layer 20 disposed in the display layer 10, and a cover plate 30 covering the display layer 10.

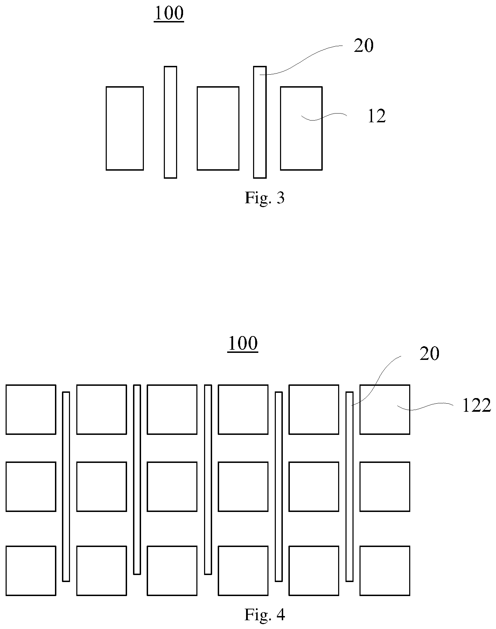

In one embodiment, the display layer 10 is a main structure for displaying pictures in a display screen, the display layer 10 includes a plurality of rows of pixel units 12 and a plurality of rows of sub-pixels 122, as shown in Fig. 3 and Fig. 4, Fig. 3 is a part of the schematic structure view of the display screen assembly of an embodiment according to the present disclosure, and is a part of the schematic structure view of the display screen assembly of another embodiment according to the present disclosure. Each pixel unit 12 is formed by a plurality of sub-pixels 122, and the sub-pixels 122 include R pixels, G pixels and B pixels, and each pixel unit 12 includes one R pixel, one G pixel and one B pixel. In some embodiments, some pixel units 12 may only include one or two sub-pixels 122 of R pixel, G pixel and B pixel, which are not specifically limited here.

The pressure sensing layer 20 is configured to sense a pressure of the user on the cover plate 30, and the pressure sensing layer 20 is disposed in the display layer 10. In one embodiment, the pressure sensing layer 20 is disposed in the adjacent pixel units 12, or in the adjacent sub-pixels 122, or both the adjacent pixel units 12 and the adjacent sub-pixels 122. In one embodiment, the pressure sensing layer 20 is a long strip shape, and the pressure sensing layer 20 is disposed in a gap between the pixel units 12 or the gap between the sub-pixels 122. That is, between two adjacent rows of pixel units 12 or two adjacent rows of sub-pixels 122.

In one embodiment, the pressure sensing layer 20 includes a plurality of branches 22, and each of the branches 22 is disposed in adjacent pixel units 12, or disposed in adjacent sub-pixels 122. Understandably, compared with the structure in which different branches 22 of the pressure sensing layer 20 are disposed between the adjacent sub-pixels 122, and the structure in which different branches 22 of the pressure sensing layer 20 are disposed between adjacent sub-pixels 12, the structure in which different branches 22 of the pressure sensing layer 20 are disposed between the adjacent sub-pixels 122 have better sensitivity and reaction speed.

Understandably, in the description of present disclosure, "a plurality" means at least two, such as two, three, etc., unless otherwise specified.

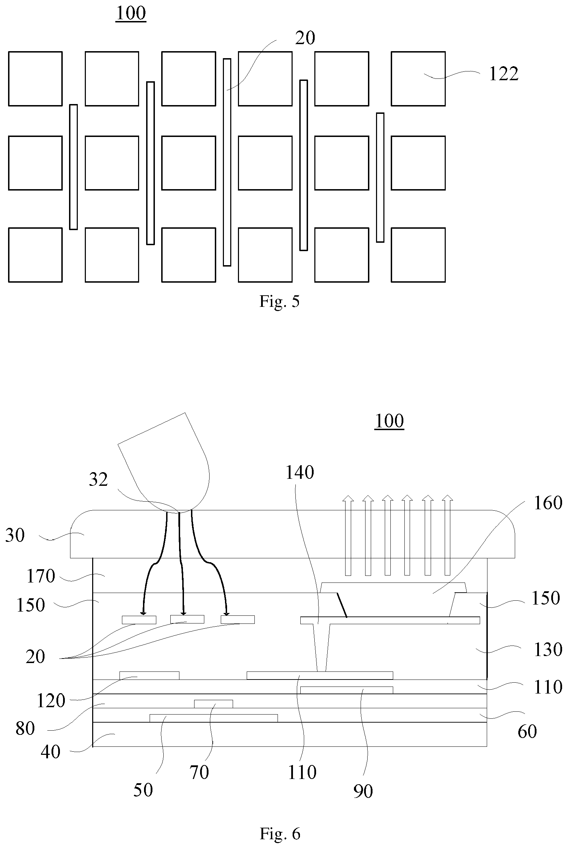

In one embodiment, different branches 22 of the pressure sensing layer 20 have different lengths. For example, among the different branches 22 side by side, the branch 22 located in the middle is the longest, and then the lengths of the branches 22 decreases to both sides gradually. As shown in Fig. 5, Fig. 5 is a part of the schematic structure view of the display screen assembly of another one embodiment according to the present disclosure. In other embodiments, different branches 22 may be equal length, or distributed at a long interval and a short interval, which is not specifically limited here.

The cover plate 30 is covered on the display layer 10 and is the outermost layer of the electronic device 200. On the one hand, the cover plate 30 is configured to protect the display layer 10 and the internal components of the electronic device 100. On the other hand, the user can view the screen displayed on the display layer 10 through the cover plate 30. In one embodiment, the cover plate 30 can be made of transparent materials such as glass or resin, which is not specifically limited here. The outer surface (area) of the cover plate 30 opposite to the pressure sensing layer 20 forms a virtual key 32, and the pressure sensing layer 20 can receive the pressure information pressed by the user through the virtual key (area) 32 in the cover plate 30. In one embodiment, the virtual key 32 is an area on the cover plate 30, namely, an area directly opposite to the pressure sensing layer 20 is an overlapping area between the two. The separated area cannot be seen from the outer surface of the electronic device 100, only a part of the whole cover plate 30 can be seen. And, there is no protrusion or depression in the virtual key (area) 32.

In one embodiment, the virtual key 32 includes at least one of a power key, a sound adjustment key or a home key. Utilizing the above structure, the number of physical keys on the electronic device 100 can be reduced, or even not set physical keys, thereby the screen-to-body ratio of the electronic device 100 can be increased.

In one embodiment, when the user presses the area corresponding to the virtual key 32, the pressure sensing layer in the electronic device 100 receives the pressure of the user through the cover plate 30 or the cover plate 30 and the intermediate layer between the cover plate 30 and the pressure sensing layer 20, and then executes the corresponding instruction according to the pressure.

In one embodiment, referring to Fig. 6, Fig. 6 is a part of the schematic structure view of the display screen assembly of others embodiment according to the present disclosure. The display screen assembly 100 includes a flexible substrate layer 40, a polysilicon layer 50, a first gate insulating layer 60, a first gate layer 70, a second gate insulating layer 80, a second gate layer 90, an intermediate dielectric layer 110, a source-drain layer 120, a planarization layer 130, an anode layer 140, a display layer 10, a pressure sensing layer 20, a pixel isolation layer 150, an organic light-emitting layer 160, a flexible packaging layer 170 and a cover plate 30. In one embodiment, the polysilicon layer 50 is disposed on one side of the flexible substrate layer 40, and completely overlapping with the flexible substrate layer 40, and a volume of the polysilicon layer 50 is smaller than the volume of the flexible substrate layer 40, and only contacts with a part of the area of the flexible substrate layer 40. The first gate insulating layer 60 is covered on the polysilicon layer 50 and the upper surface of the flexible substrate layer 40 which is not covered by the polysilicon layer 50. The first gate layer 70 is disposed on the first gate insulating layer 60, completely overlapping with the first gate insulating layer 60, and the volume of the first gate layer 70 is smaller than the volume of the first gate insulating layer 60, and only contacts with a part of the upper surface of the first gate insulating layer 60. The second gate insulating layer 80 is covered on the first gate layer 70 and the upper surfaces of the first gate insulating layer 60 which is not covered by the first gate layer 70.

The expressions "first", "second", and "third" in present disclosure are used for descriptive purposes only, and shall not be interpreted as indicating or implying relative importance or implicitly specifying the number of an indicated technical feature. Therefore, features defined by "first" and "second" may explicitly or implicitly include at least one of the such feature.

The second gate layer 90 is disposed on the side of the second gate insulating layer 80 away from the flexible substrate layer 40, and the second gate layer 90 is overlapped with the second gate insulating layer 80, and the volume of the second gate layer 90 is smaller than the volume of the second gate insulating layer 80, and only contacts with a part of the upper surface of the second gate insulating layer 80. In one embodiment, the polysilicon layer 50 is opposite to the first gate layer 70, and the first gate layer 70 and the second gate layer 90 are dislocated.

The intermediate dielectric layer 110 is covered on the second gate layer 90 and the upper surface of the second gate insulating layer 80 which is not covered by the second gate layer 90. The drain layer 120 is disposed on the side of the intermediate dielectric layer 110 away from the flexible substrate layer 40. The planarization layer 130 is covered on the source-drain layer 120. The anode layer 140 is disposed on the side of the planarization layer 130 away from the flexible substrate layer 40, and a part of the anode layer 140 is connected with the source-drain layer 120 through the planarization layer 130.

In present disclosure, the pixel units 12 in the display layer 10 are disposed in a same layer as the anode layer 140, and the pressure sensing layer 20 is disposed in a gap between adjacent pixel units 12 or the gap between adjacent sub-pixels 122. Therefore, the pressure sensing layer 20 is disposed in the same layer as a part of the anode layer 140.

In one embodiment, the pressure sensing layer 20 is made of the same material as the anode layer 140. Utilizing the above structure, the anode layer 140 and the pressure sensing layer 20 can be formed at same time by using the same materials and processes in the preparation process, without adding additional materials and processes due to the need to make the pressure sensing layer 140, and the pressure sensing layer 140 can be made by only using the processes that originally need to make the anode layer 20, thus the steps of the preparation process is reduced and the production efficiency is improved.

The pixel isolation layer 150 is covered on the pixel unit 12, the pressure sensing layer 20, the anode layer 140, and covered on the upper surfaces of the planarization layer 130 which are not covered by the pixel unit 12, the pressure sensing layer 20, and the anode layer 140. And the part of the pixel isolation layer 150 in contact with the anode layer 140 forms a through hole, and the organic light-emitting layer 160 is located on the pixel isolation layer 150 and a part of the pixel isolation layer 150 is connected with the anode layer 140 through the pixel isolation layer 150.

The flexible packaging layer 170 is disposed on the pixel isolation layer 150 and the organic light-emitting layer 160, and the cover plate 30 is disposed on the flexible packaging layer 170 and formed at the outermost side of the electronic device 200.

Understandably, utilizing the above structure, the pressure sensing layer 20 is configured to realize the function of the pressure sensor. Pressing the virtual key 32 of the cover plate 30 with fingers, the cover plate 30 may be partially deformed, so that corresponding deformations of the flexible packaging layer 170, the pixel isolation layer 150, the pressure sensing layer 20 and other layers can be occurred, and then the user's pressing can be detected and the corresponding instructions can be executed.

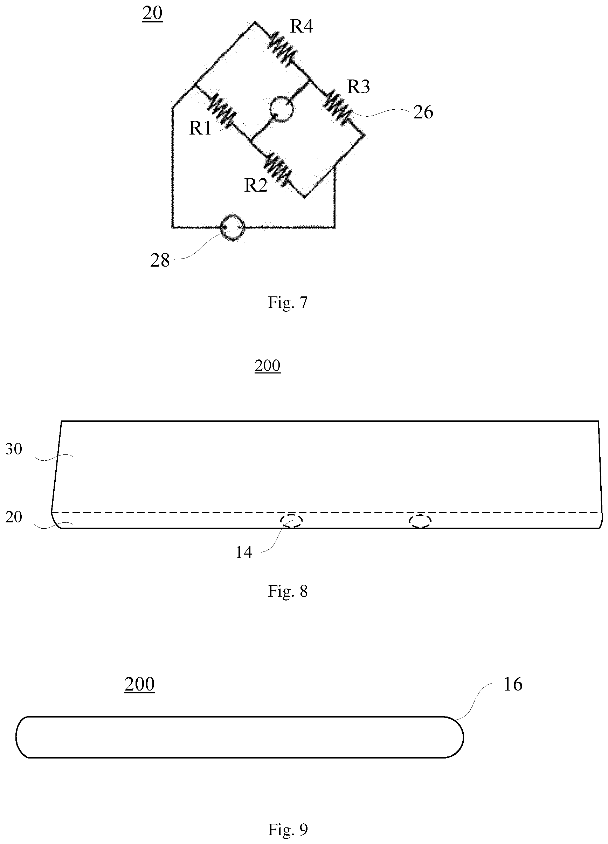

In one embodiment, a Wheatstone bridge circuit 24 is disposed in the pressure sensing layer 20, as shown in Fig. 7, Fig. 7 is a part of the schematic structural view of the Wheatstone Bridge Circuit of an embodiment according to the present disclosure. The Wheatstone bridge circuit 24 is configured to detect whether a user presses or touches the virtual key 32 of the cover plate 30, so as to the pressing detection of the virtual key 32 is realized and the effect of pressing the corresponding key is achieved.

Furthermore, the Wheatstone bridge circuit 24 includes four resistors 26 connected to each other to form four arms, and the resistors are connected to an ammeter 28. The Wheatstone bridge circuit 24 is a device composed of four resistors 26 and configured to measure the resistance value of one of the four resistor 26 (which the resistance values of the other three resistors are known). The four resistors 26 form a square. The ammeter 28 connects two opposite connectors.

The Wheatstone bridge circuit 24 (also called single-arm bridge circuit) is an instrument that can measure resistance accurately. The general Wheatstone bridge resistors R1, R2, R3, R4 are called the four arms of the bridge, and the ammeter 28 is configured to check whether there is current in the branch of the Wheatstone bridge circuit 24.

When there is no current flows through the ammeter 28, the Wheatstone bridge circuit 24 reaches an equilibrium. When in the balance state, the resistance values of the four arms have a simple relationship, the relationship can be configured to measure the resistance. When the ammeter shows that no current flows, the Wheatstone bridge circuit 24 is in an equilibrium state, namely, R1•R2=R3•R4.

When a current flows through the ammeter 28, the Wheatstone bridge circuit 24 is not in the equilibrium state, which is configured to measure a subtle change in the resistance value. For example, if a resistance strain gauge (formed by sticking a resistance wire in a grid shape between two layers of thin paper or plastic film) is adhered to an object, when the pressure sensing layer 20 deforms, the strain gauge also can be deformed, and the resistance of the strain gauge is changed from Rx when the bridge is equilibrium to Rx+△R. At this time, a current Ig passing through the ammeter 28 also can be changed, and then a △R can be measured according to the relationship between the Ig and the △R, and then the deformation of the object can be measured according to the relationship between the △R and the solid deformation.

In one embodiment, the deformation of the pressure sensing layer 20 causes the resistance 26 in the Wheatstone bridge 24 to change. Detecting the corresponding resistance change, the pressure can be measured, namely, the deformation is determined by the pressure, and the resistance in the Wheatstone bridge circuit is determined by the deformation. The ammeter 28 is configured to detect the current change caused by the deformation resulted of the user pressing the virtual key 32 on the cover plate, and then the resistance value is changed by the current change, so as to realize the pressure detection.

In one embodiment, a hidden identifier 14 is set at the display layer 10 corresponding to the virtual key 32, as shown in Fig. 8, Fig. 8 is a schematic structural view of an electronic device of another embodiment according to the present disclosure. The hidden identifier 14 is displayed when a touch is received at the virtual key 32 or around the virtual key 32. Understandably, utilizing the above structure in the present disclosure, and there is no physical key from the external surface of the electronic device 200, and the cover plate 30 has no protrusion or depression structure on the opposite external surface of the virtual key 32. The hidden identifier 14 set in the present disclosure can make the screen display the position of the virtual key 32 as long as the user touches or presses the position near the virtual key 32 according to the instructions, so that the pressed position of the virtual key 32 can be quickly find by the user, and at the same time, also increases the interest of using the virtual key 32.

In one embodiment, when the virtual key 32 is a sound regulator, the hidden identifier 14 can be a long column shape. Understandably, Utilizing the above structure, the volume increasing key and the volume decreasing key can be integrated. The user can press the virtual key 32 by sliding up and down to adjust the volume. When the user presses the virtual key 32 to slide up, the volume increases, and when the user presses the virtual key 32 to slide down, the volume decreases. Utilizing the above structure, not only can help users to find the virtual key 32 quickly, but also the interest and mystery of the virtual key 32 are increased.

In one embodiment, the hidden identifier 14 is an indicator light, which lights up when a touch is received at the virtual key 32. Utilizing the above structure, as long as the user presses near the virtual key 32, the user can be reminded of the position of the virtual key 32 in a brighter way, so that the user can find the virtual key 32 quickly.

In one embodiment, the display layer 10 and the cover plate 30 can be curved structures, as shown in Fig. 9, Fig. 9 is a schematic structural side view of the electronic device of an embodiment according to the present disclosure. Both the display layer 10 and the cover plate 30 form a bent portion 16 at the edge, and the pressure sensing layer 20 is located at the positions corresponding to the bent portion 16. Utilizing the above structure, the display layer 10 can be extended to both sides of the electronic device 200, and the screen-to-body ratio can be further increased. At the same time, setting the pressure sensing layer 20 at the side of the electronic device 200 is conform to the usage habits of users.

Utilizing the above structure in the present disclosure, the setting of physical keys in the electronic device 200 can be reduced, and even does not need to set physical keys. The pressure sensing layer 20 disposed inside the electronic device 200 can sense the pressure information of the virtual key 32 pressed by the user on the surface of the cover plate 30, and then complete different instructions according to the pressure information to realize corresponding functions, thus the screen-to-body ratio of the display screen assembly 100 and the electronic device 200 can be further increased.

The above shows only embodiments of the present disclosure, but does not limit the scope of the present disclosure. Any equivalent structure or equivalent process transformation made based on the specification and the accompanying drawings of the present disclosure, applied directly or indirectly in other related arts, shall be included in the scope of the present disclosure.

## Claims

1. A display screen assembly, **characterized by** comprising:
a display layer, comprising a plurality of rows of pixel units and a plurality of rows of sub-pixels;
a pressure sensing layer, disposed in adjacent pixel units or adjacent sub-pixels; and
a cover plate, covered on the display layer, wherein a surface of the cover plate corresponding to the pressure sensing layer forms a virtual key, and the pressure sensing layer is configured to receive a pressure information by the virtual key of the cover plate.

2. The display screen assembly of claim 1, wherein a Wheatstone bridge circuit is disposed in the pressure sensing layer, and wherein the Wheatstone bridge circuit is configured to detect whether the virtual key of the cover plate is pressed or not.

3. The display screen assembly of claim 2, wherein the Wheatstone bridge circuit comprises four resistors, the four resistors are connected to each other to form four arms, and the four resistors are connected with an ammeter.

4. The display screen assembly of claim 1, wherein an anode layer is disposed in the display screen assembly, and the pressure sensing layer is made of the same material as the anode layer.

5. The display screen assembly of claim 1, wherein the virtual key comprises at least one of a power key, a sound adjustment key or a home key.

6. The display screen assembly of claim 5, wherein a hidden identifier is disposed at the display screen corresponding to the virtual key, and the hidden identifier is displayed when the virtual key or the periphery of the key is touched.

7. The display screen assembly of claim 6, wherein when the virtual key is a sound adjustment key, the hidden identifier is a long column shape.

8. The display screen assembly of claim 7, wherein the hidden identifier is an indicator light, and the indicator light lights up when the virtual key is touched.

9. The display screen assembly of claim 1, wherein the display layer and the cover plate are curved structures, the display layer and the cover plate both form bent portion at the edges, and the pressure sensing layer is located at the position corresponding to the bent portion.

10. The display screen assembly of claim 1, wherein the pressure sensing layer comprises:
a plurality of branches, each branch is disposed in adjacent pixel units or adjacent sub-pixels, and different branches have different lengths.

11. A display screen assembly, **characterized by** comprising:
a display layer, comprising a plurality of rows of pixel units and a plurality of rows of sub-pixels;
a pressure sensing layer, disposed in adjacent pixel units and/or adjacent sub-pixels; and
a cover plate, covered on the display layer, wherein an area of the cover plate corresponding to the pressure sensing layer forms a virtual key area, and the pressure sensing layer is configured to receive a pressure information by the virtual key area of the cover plate.

12. An electronic device, **characterized by** comprising a back shell and a display screen assembly overlapped with the back shell, wherein the display screen assembly comprises:
a display layer, comprising a plurality of rows of pixel units and a plurality of rows of sub-pixels;
a pressure sensing layer, disposed in adjacent pixel units or adjacent sub-pixels; and
a cover plate, covered on the display layer, wherein a surface of the cover plate corresponding to the pressure sensing layer forms a virtual key, and the pressure sensing layer is configured to receive a pressure information by the virtual key of the cover plate.

13. The electronic device of claim 12, wherein a Wheatstone bridge circuit is disposed in the pressure sensing layer, and wherein the Wheatstone bridge circuit is configured to detect whether the virtual key of the cover plate is pressed or not.

14. The electronic device of claim 13, wherein the Wheatstone bridge circuit comprises four resistors, the four resistors are connected to each other to form four arms, and the four resistors are connected with an ammeter.

15. The electronic device of claim 12, wherein
an anode layer is disposed in the display screen assembly, and the pressure sensing layer is made of the same material as the anode layer.

16. The electronic device of claim 12, wherein the virtual key comprises at least one of a power key, a sound adjustment key or a home key.

17. The electronic device of claim 16, wherein
a hidden identifier is disposed at the display screen corresponding to the virtual key, and the hidden identifier is displayed when the virtual key or the periphery of the key is touched.

18. The electronic device of claim 17, wherein the hidden identifier is an indicator light, and the indicator light lights up when the virtual key is touched.

19. The electronic device of claim 12, wherein the display layer and the cover plate are curved structures, the display layer and the cover plate both form bent portion at the edges, and the pressure sensing layer is located at the position corresponding to the bent portion.

20. The electronic device of claim 12, wherein the pressure sensing layer comprises:
a plurality of branches, each branch is disposed in adjacent pixel units or adjacent sub-pixels, and different branches have different lengths.
